# DEMANDE DE BREVET EUROPEEN

(11) **EP 0 654 424 A1**
(43) Date de publication de la demande: **24.05.1995**
(21) Numéro de dépôt: 94402596.4
(22) Date de dépôt: 16.11.1994
(51) Int. Cl.: B65F 1/14, B65F 1/00, B65F 1/12, B65F 3/00

(54) **Ensemble modulaire pour la collecte sélective et le transport de déchets**

(30) Priorité: 18.11.1993 FR 9313792
(71) Demandeur: SACOVAD, Sàrl, F-49530 Lire (FR)
(72) Inventeur: Bouthours, Bernhard, F-49530 Lire (FR)
(74) Mandataire: Dawidowicz, Armand

(57) **Abrégé**

Ensemble caractérisé en ce que chaque module (1), disposé transversalement sur le châssis du véhicule et équipé à au moins une de ses extrémités d'une ouverture pour permettre le chargement et/ou le déchargement latéral des déchets, comporte des faces formant fond (2,13) du compartiment inférieur et du compartiment supérieur équipées d'une bande transporteuse (5) entraînée à rotation dans au moins un sens, la face formant fond (2) du compartiment supérieur étant en outre animée d'un mouvement de monte et baisse à l'intérieur dudit conteneur pour permettre l'introduction sélective à une hauteur constante de déchets par simple déplacement de la plaque mobile (2) formant fond du compartiment supérieur au-dessus ou au-dessous de l'ouverture de l'enceinte ménagée à hauteur d'homme.
Application au ramassage d'ordures ménagères.

## Description

La présente invention concerne un ensemble pour la collecte sélective et le transport de déchets, tels que des ordures ménagères, en vue de leur traitement ultérieur.

Les dispositifs pour la collecte et le transport de déchets connus à ce jour sont généralement constitués d'un véhicule dont le châssis est formé d'une seule pièce avec la trémie de chargement. Tel est le cas du dispositif décrit dans le brevet anglais GB-A-428.645 dans lequel le corps du véhicule délimite une enceinte fermée divisée en au moins deux compartiments pour permettre, lors du ramassage de déchets, un compactage des déchets.

Il en est de même du dispositif décrit dans le brevet allemand DE-A-2.435.100 où la remorque attelée au véhicule constitue une benne de chargement des déchets, cette benne étant équipée d'un fond pivotant pour permettre la vidange des déchets au moyen d'une roue.

Dans ces installations, où la trémie de chargement reste solidaire du châssis du véhicule, on a également mis en place des dispositifs permettant lors de la collecte un tri de déchets. Tel est le cas du dispositif décrit dans la demande internationale W0-A-93.01111 dans lequel il est décrit un véhicule de collecte des déchets équipé d'un bras qui permet le déchargement de poubelles et le renversement de leur contenu dans des zones de stockage superposées.

Enfin, un dernier dispositif, décrit dans le brevet allemand DE-B-1.237.948, décrit quant à lui un ensemble constitué d'un véhicule sur lequel sont chargés au moyen d'un bras des conteneurs de déchets qui sont vidés par soulèvement de ces derniers.

Tous les dispositifs décrits ci-dessus présentent le même inconvénient, à savoir, qu'ils nécessitent un véhicule spécifique équipé d'un bras de levage ou d'un dispositif de manoeuvre équivalent pour permettre le chargement ou éventuellement le déchargement de déchets.

Aucun de ces dispositifs ne permet donc de réaliser manuellement et à hauteur d'homme un chargement de déchets tout en assurant un tri sélectif significatif et un compactage de ces derniers.

Le but de la présente invention est de pallier ces inconvénients précités en proposant un ensemble pour la collecte, le transport et le tri sélectif de déchets dans lequel le ramassage et le tri des déchets peuvent être réalisés manuellement, le chargement des déchets dans les conteneurs de l'installation s'effectuant toujours à hauteur d'homme sans nécessiter d'effort spécifique des personnes chargées de la collecte.

Un autre but de la présente invention est de proposer une installation permettant simultanément lors de la collecte, d'une part un tri, d'autre part un compactage des déchets accélérant ainsi les opérations de traitements ultérieurs.

Un dernier but de l'invention est de proposer une installation permettant un déchargement de l'ensemble des conteneurs de l'installation sans aucune intervention humaine uniquement par actionnement de moyens de commande appropriés.

L'invention concerne à cet effet un ensemble modulaire pour la collecte sélective et le transport de déchets, tels que des ordures ménagères, du type comprenant un véhicule de collecte et de transport de déchets sur le châssis duquel est disposé au moins un module tel qu'un conteneur affectant la forme d'une enceinte généralement fermée équipée de moyens d'accès au contenu dudit conteneur pour permettre le chargement et le déchargement des déchets, cette enceinte étant divisée en au moins deux compartiments superposés au moyen de la face formant fond du compartiment supérieur, caractérisé en ce que chaque conteneur, disposé transversalement sur le châssis du véhicule et équipé à au moins une de ses extrémités d'une ouverture pour permettre le chargement et/ou le déchargement' latéral des déchets, comporte des faces formant fond du compartiment inférieur et du compartiment supérieur équipées d'une bande transporteuse entraînée à rotation dans au moins un sens pour permettre le transport de déchets dans une direction éloignée du point de chargement, la face formant fond du compartiment supérieur étant en outre animée d'un mouvement de monte et baisse à l'intérieur dudit conteneur pour permettre l'introduction sélective à une hauteur constante des déchets par simple déplacement de la plaque mobile formant fond du compartiment supérieur au-dessus ou au-dessous de l'ouverture de l'enceinte et un compactage de ces derniers.

Selon une forme de réalisation préférée de l'invention, les conteneurs sont disposés côte à côte transversalement sur le châssis du véhicule de manière à délimiter un ensemble d'aires de stockage des déchets.

L'invention sera bien comprise à la lecture de la description suivante d'exemples de réalisation, en référence aux dessins annexés dans lesquels :
la figure 1 représente une vue en perspective d'un conteneur conforme à l'invention ;
la figure 2 représente le détail de l'articulation de la tige du vérin sur la face formant fond mobile du compartiment supérieur et
la figure 3 représente une vue de côté en coupe d'une variante du dispositif d'actionnement de la face formant fond du compartiment supérieur.

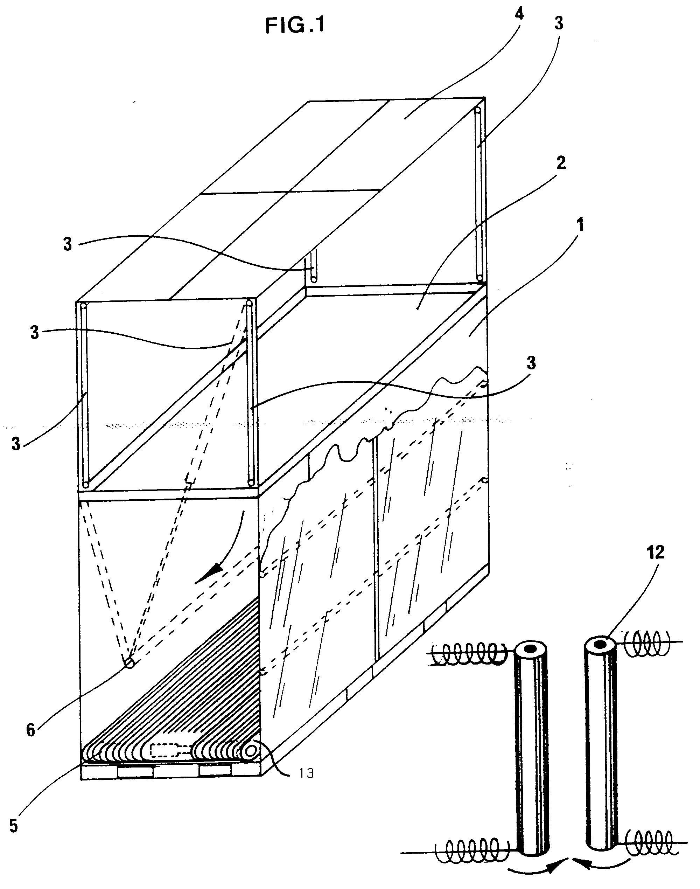

L'ensemble pour la collecte sélective et le transport de déchets, objet de l'invention, comprend un véhicule de collecte et de transport de déchets, non représenté, sur le châssis duquel est disposé au moins un module constitué par un conteneur 1 de stockage sélectif de déchets du type représenté à la figure 1. Généralement, ces conteneurs 1 sont disposés côte à côte sur le châssis du véhicule et transversalement à ce dernier, de telle sorte que le chargement et le déchargement de ces conteneurs s'effectue le long des bords latéraux du châssis dudit véhicule. Ce conteneur de stockage se présente sous la forme d'une enceinte parallélépipédique 1, généralement fermée. Cette enceinte est cependant équipée de moyens d'accès au contenu dudit conteneur, ces moyens d'accès étant constitués par des ouvertures obturables ménagées au voisinage du point de chargement et du point de déchargement dudit conteneur. Dans l'exemple représenté à la figure 1, les moyens de fermeture ne sont pas représentés. Ils peuvent, dans leur expression la plus simple, être constitués par de simples portes disposées sur la face avant et/ou la face arrière de l'enceinte 1 représentée à la figure 1. Ces moyens de fermeture seront toujours constitués en au moins deux éléments, un élément supérieur et un élément inférieur de manière à permettre la fermeture partielle ou totale de l'un ou l'autre des compartiments ménagés dans cette enceinte 1 lors des opérations de chargement ou de déchargement. Une description plus détaillée de ces moyens de fermeture sera proposée ci-après.

L'enceinte 1 est divisée en au moins deux compartiments superposés au moyen de la face formant fond 2 du compartiment supérieur, de telle sorte que les déchets, en fonction de leur nature et/ou de leur destination ou de leur traitement, seront disposés dans l'un ou l'autre des compartiments. Cette face formant fond 2 est animée d'un mouvement de monte et baisse grâce à des organes d'actionnement 3 qui, dans l'exemple représenté à la figure 1, sont disposés aux quatre angles de la face formant fond 2 et relient cette dernière à la face du dessus 4 du compartiment supérieur. Dans l'exemple représenté, le conteneur est divisé uniquement en deux compartiments. En conséquence, la face du dessus du compartiment supérieur constitue également la face formant toit 4 dudit conteneur.

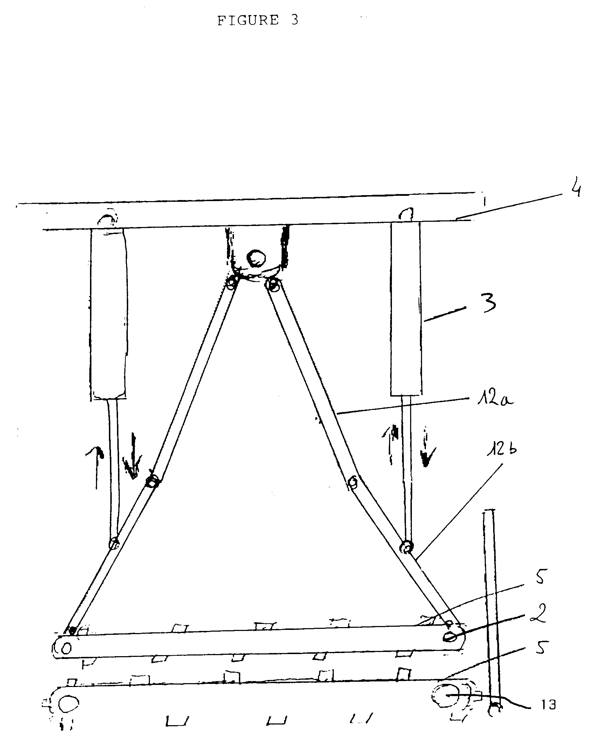

Une variante de ce dispositif d'actionnement de la face formant fond 2 du compartiment supérieur est représentée à la figure 3. Dans ce cas, chaque organe d'actionnement est constitué d'un organe animé d'un mouvement alternatif tel qu'un vérin 3, et d'un bras articulé (12a, 12b) sur lequel agit le verin 3. Ce bras articulé affectant la forme d'une équerre à géométrie variable est constitué d'au moins deux biellettes 12a, 12b reliant la face formant fond 2 du compartiment supérieur et la face du dessus 4 du compartiment supérieur. Lors d'un actionnement du vérin 3, entraînant par exemple l'extension de la tige du vérin 3, la branche inférieure constitué par la biellette 12b dudit bras vient se placer sensiblement dans l'alignement de la branche constituée par la biellette 12a du bras supérieur entraînant un abaissement de la plaque 2 formant fond. A l'inverse, lors d'une rétraction de la tige du vérin 3, la branche inférieure formée par la biellette 12b du bras vient se placer sensiblement à l'horizontale entraînant, lors de son mouvement, la remontée du plateau 2 formant fond. Ce bras affecte donc la forme d'une équerre à géométrie variable dont le déplacement de la branche inférieure formée par la biellette 12b est commandé par ledit vérin 3. Les organes d'actionnement 3, 12a, 12b, tels que décrits ci-dessus, sont au moins au nombre de quatre par conteneur et sont généralement disposés au voisinage ou sur les bords longitudinaux de la plaque 2 et de la face du dessus 4. Grâce à un tel système, on obtient une amplitude de mouvement de la face formant fond 2 du compartiment supérieur beaucoup plus importante que dans le cas du dispositif représenté à la figure 1. De ce fait, l'opération de compactage est améliorée.

Dans un mode de réalisation particulier de l'invention, outre ces déplacements haut et bas, la plaque mobile 2 est capable de pivoter autour d'au moins un point d'articulation constitué par une extrémité d'un organe d'actionnement. Généralement, ce mouvement de pivotement s'effectuera autour de l'un des bords de ladite plaque 2 pour permettre l'évacuation, le tassement ou la compression des déchets. Ce mouvement de pivotement de la plaque formant fond 2 du compartiment supérieur, tel que représenté par la ligne en pointillé à la figure 1, est obtenu par un actionnement approprié des organes d'actionnement 3.

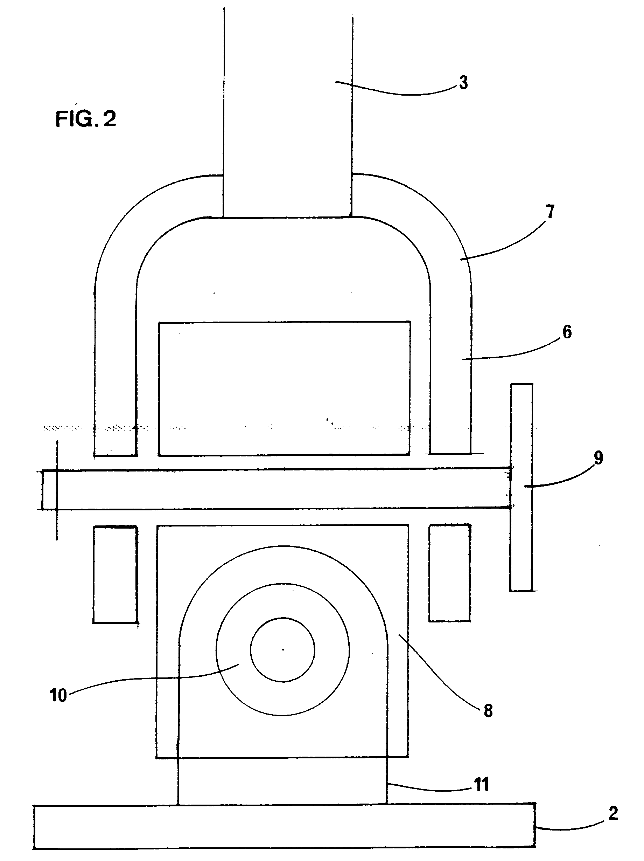

Dans l'exemple représenté à la figure 1, les organes d'actionnement 3 sont constitués par des vérins double effet reliant la face supérieure de la plaque formant fond 2 du compartiment supérieur avec la face du dessus 4 dudit compartiment et sont montés solidaires de ce dernier au moyen d'une liaison articulée conforme, par exemple, à celle représentée à la figure 2. Dans ce cas, cette liaison 6 est omnidirectionnelle de type cardan. Ainsi, dans l'exemple représenté à la figure 2, la tige du vérin 3 est montée au moyen d'une chape 7 généralement en forme de U sur un premier axe d'articulation horizontal 9, ce premier axe 9 traversant lui-même une pièce de liaison 8 traversée orthogonalement par un deuxième axe 10 qui est monté solidaire, au moyen d'une chape 11 également en forme de U, de la face formant fond 2 du compartiment supérieur. La réalisation du croisillon 9, 10 peut être diverse. Ainsi, il est également possible d'imaginer que les axes 9 et 10 sont formés d'une seule pièce, la pièce de liaison 8 pouvant dans ce cas être supprimée. Grâce à cette configuration, par actionnement du vérin 3, la face formant fond 2 du compartiment supérieur est capable de pivoter dans le sens représenté par la flèche de la figure 1 de manière à permettre la vidange de son contenu sur la face formant fond du compartiment inférieur.

Il est également possible, pour compléter le déplacement de cette plaque mobile 2, de disposer à chaque coin du conteneur des vérins 3 à commande indépendante, chaque vérin étant équipé d'une liaison omnidirectionnelle du type conforme à celle de la figure 2. On peut ainsi obtenir un pivotement de la plaque formant fond 2 du conteneur d'une part de la droite vers la gauche, voire de la gauche vers la droite dans la figure 1, d'autre part de l'avant vers l'arrière, respectivement de l'arrière vers l'avant, dans cette figure. De ce fait, un grand nombre de combinaisons sont possibles. Ces mouvements de l'avant vers l'arrière, respectivement de l'arrière vers l'avant, de la plaque mobile permettent, par exemple lors du chargement du côté de la face avant, un tassement des déchets vers la face arrière.

Pour faciliter la tâche de la personne devant charger ou décharger le conteneur, les faces (13,2) formant respectivement fond du compartiment inférieur et du compartiment supérieur sont équipées d'une bande transporteuse 5 entraînée en rotation dans au moins un sens pour permettre le transport de déchets dans une direction éloignée du point de chargement. Dans certains cas, cette bande transporteuse 5 pourra être animée d'un mouvement de rotation dans les deux sens. Ce dispositif de chargement pourra être complété par deux rouleaux verticaux rotatifs 12 disposés à l'entrée du conteneur 1 à l'extérieur dudit conteneur. Ces rouleaux 12 seront placés à hauteur d'homme et seront écartés l'un de l'autre d'une distance suffisante pour permettre l'introduction de déchets à l'intérieur du conteneur. Ces rouleaux 12 seront maintenus solidaires du conteneur 1 au moyen d'organes de liaison appropriés. Ces rouleaux 12 favorisent l'avance des déchets à l'intérieur du conteneur 1.

Les conteneurs sont fermés, au niveau de leur face avant et de leur face arrière, par des moyens de fermeture constitués d'au moins deux éléments : un élément solidaire de la face du dessus 4 du compartiment supérieur, un élément solidaire de la face formant fond 13 du compartiment inférieur. L'élément solidaire du compartiment supérieur sera généralement constitué par un volet roulant dont le mouvement est commandé au moyen d'au moins un vérin, de manière à permettre une ouverture plus ou moins importante de la partie supérieure dudit compartiment. A l'inverse, le moyen de fermeture inférieur dudit compartiment sera formé d'au moins un volet solidarisé au conteneur 1 au moyen d'une charnière disposée transversalement entre les parois latérales dudit conteneur 1 pour permettre une ouverture de la partie inférieure du conteneur 1 par simple pivotement du volet autour de ladite articulation.

L'intérêt de tels moyens de fermeture est de permettre d'avoir toujours une ouverture du conteneur disposée sensiblement à hauteur d'homme pour permettre le chargement de l'un ou l'autre des compartiments à une hauteur constante. En effet, indépendamment de l'emplacement de l'ouverture, le remplissage de l'un ou l'autre des compartiments se fera par déplacement de la face formant fond 2 du compartiment supérieur qui sera par la suite de nouveau déplacée pour permettre éventuellement un compactage des déchets introduits.

Lors de l'opération de chargement, les moyens de fermeture bas seront généralement maintenus en position fermée, les moyens de fermeture haut étant ouverts. A l'inverse, lors de l'opération de déchargement, on aura plutôt tendance à ouvrir les moyens de fermeture bas.

La mise en oeuvre de l'opération de chargement/déchargement d'un tel conteneur est la suivante : dans un premier temps, on charge le compartiment supérieur dudit conteneur au moyen de déchets de même nature. Pour ce faire, on abaisse la plaque mobile formant fond 2 du compartiment supérieur de manière à l'amener juste au-dessous de l'ouverture ménagée sur l'une des faces du conteneur. Une fois les déchets chargés sur cette plaque mobile, on pourra, lorsqu'ils seront disposés en quantité suffisante, rapprocher cette plaque mobile formant fond 2 de la plaque du dessus 4 du compartiment supérieur de manière à comprimer les déchets entre lesdites plaques. Une fois cette compression réalisée, on pourra de nouveau charger le compartiment supérieur grâce au dégagement d'espace réalisé. On actionnera de temps en temps la bande transporteuse 5 qui permettra d'éloigner les déchets du point de chargement en les amenant par exemple vers le point de déchargement généralement disposé à l'opposé du conteneur. Une fois le compartiment supérieur chargé, il conviendra alors de charger le compartiment inférieur. Bien évidemment, ces deux compartiments peuvent être chargés en parallèle ou en série.

La face formant fond 2 du compartiment supérieur pourra également servir de plaque de compression en ce qui concerne le contenu du compartiment inférieur. On utilisera pour le chargement du compartiment inférieur la bande transporteuse 5 qui permettra d'éloigner les déchets du point de chargement en les amenant vers le fond du conteneur 1. Une fois le conteneur chargé, il sera amené jusqu'au lieu de traitement des déchets. Sur ce lieu, les déchets seront évacués, généralement par vidange, dans un premier temps, du compartiment inférieur, puis vidange, dans un second temps, du compartiment supérieur. La vidange des compartiments inférieur et supérieur s'effectuera par simple mise en marche de la bande transporteuse 5 de manière à permettre une évacuation automatique des déchets. La vidange du compartiment supérieur s'effectuera éventuellement en deux temps : d'abord par amenée des déchets du compartiment supérieur vers le compartiment inférieur par abaissement de la face formant fond 2 du compartiment supérieur puis par actionnement de la bande transporteuse 5. Il est également possible d'avoir une vidange de ces déchets contenus dans le compartiment supérieur en inclinant la face formant fond 2 du compartiment supérieur de l'avant vers l'arrière ou de l'arrière vers l'avant conformément à la figure 1 ou en pivotant ladite face 2 de telle sorte que les déchets puissent, par simple gravité, s'évacuer de cette plaque formant fond constituant alors une rampe inclinée du compartiment supérieur. De ce fait, tout en optimisant le chargement du conteneur grâce à des moyens de compression appropriés, on réalise un chargement sélectif de ces conteneurs et de ce fait, le traitement ultérieur des déchets est facilité.

En outre, en raison du positionnement particulier des conteneurs sur le châssis du véhicule, on obtient un ensemble modulaire dans lequel on peut augmenter ou diminuer le nombre d'aires de stockage en fonction de la collecte à réaliser. Il suffit simplement pour ce faire d'augmenter ou de diminuer le nombre de conteneurs 1 installés sur le châssis du véhicule. Cette modularité est rendue possible grâce au fait que chaque conteneur est entièrement indépendant et possède sa propre centrale de commande.

## Revendications

1. Ensemble modulaire pour la collecte sélective et le transport de déchets, tels que des ordures ménagères, du type comprenant un véhicule de collecte et de transport de déchets sur le châssis duquel est disposé au moins un module constitué d'un conteneur (1) affectant la forme d'une enceinte généralement fermée équipée de moyens d'accès au contenu dudit conteneur pour permettre le chargement et le déchargement des déchets, cette enceinte étant divisée en au moins deux compartiments superposés au moyen de la face formant fond (2) du compartiment supérieur,
caractérisé en ce que chaque conteneur (1), disposé transversalement sur le châssis du véhicule et équipé à au moins une de ses extrémités d'une ouverture pour permettre le chargement et/ou le déchargement latéral des déchets, comporte des faces formant fond (2,13) du compartiment inférieur et du compartiment supérieur équipées d'une bande transporteuse (5) entraînée à rotation dans au moins un sens pour permettre le transport de déchets dans une direction éloignée du point de chargement, la face formant fond (2) du compartiment supérieur étant en outre animée d'un mouvement de monte et baisse à l'intérieur dudit conteneur pour permettre l'introduction sélective à une hauteur constante de déchets par simple déplacement de la plaque mobile (2) formant fond du compartiment supérieur au-dessus ou au-dessous de l'ouverture de l'enceinte ménagée à hauteur d'homme.

2. Ensemble selon la revendication 1,
caractérisé en ce que la plaque mobile (2) formant fond du compartiment supérieur du conteneur (1) est actionnée au moyen d'au moins quatre organes d'actionnement, chaque organe d'actionnement étant constitué d'un organe animé d'un mouvement alternatif, tel qu'un vérin (3), et de deux biellettes (12a, 12b) formant les branches d'une équerre à géométrie variable reliant la face du dessus (4) et la face formant fond (2) du compartiment supérieur, l'une des branches de ladite équerre, de préférence la branche (12b) solidarisée à la face formant fond (2) de ladite équerre étant déplacée au moyen dudit organe alternatif (3) pour animer la plaque formant fond (2) d'un mouvement de monte et baisse.

3. Ensemble selon la revendication 1,
caractérisé en ce que les organes d'actionnement (3) de la plaque mobile (2) formant fond du compartiment supérieur du conteneur (1) sont constitués par des organes à mouvement alternatif, tels que des vérins double effet, disposés dans les angles du conteneur (1) et reliant la face supérieure de la plaque formant fond (2) du compartiment supérieur avec la face du dessus (4) dudit compartiment.

4. Ensemble selon l'une des revendications 1 et 3,
caractérisé en ce que lesdits organes d'actionnement (3) comportent, à au moins une de leurs extrémités, une liaison articulée.

5. Ensemble selon la revendication 4,
caractérisé en ce que les liaisons articulées des organes d'actionnement commandés de manière indépendante ou simultanée sont des liaisons omnidirectionnelles (6) de type cardan.

6. Ensemble selon l'une des revendications 4 et 5,
caractérisé en ce que la liaison omnidirectionnelle (6) est formée d'un croisillon dont les axes (9, 10) sont respectivement articulés sur une chape (11) solidaire de la plaque mobile formant fond (2) et sur une chape (7) solidaire de l'extrémité de la tige (3) du vérin constituant l'organe d'actionnement.

7. Ensemble selon la revendication 6,
caractérisé en ce que le croisillon est formé d'une seule pièce au moyen d'axes (9, 10) perpendiculaires.

8. Ensemble selon la revendication 6,
caractérisé en ce que le croisillon est formé de deux axes (9, 10) maintenus orthogonaux au moyen d'une pièce de liaison (8) appropriée.

9. Ensemble selon l'une des revendications 1 à 8,
caractérisé en ce que les conteneurs (1) sont disposés côte à côte transversalement sur le châssis du véhicule de collecte et de transport des déchets.

10. Ensemble selon la revendication 1,
caractérisé en ce que l'ouverture du conteneur (1) est fermée au moyen d'au moins deux éléments de fermeture actionnés de manière indépendante et solidarisés et/ou articulés respectivement à la face du dessus formant toit (4) du compartiment supérieur et à la face du dessous (2) formant fond du compartiment supérieur.
